# EUROPEAN PATENT APPLICATION

(11) **EP 1 385 333 A1**
(43) Date of publication of application: **28.01.2004**
(21) Application number: 02720558.2
(22) Date of filing: 22.04.2002
(51) Int. Cl.: H04N 5/225, G06T 1/00, H04L 9/32, H04M 1/02, H04M 1/21, H04M 1/66, H04Q 7/38

(54) **CELLULAR TERMINAL APPARATUS**

(30) Priority: 27.04.2001 JP 2001132235
(71) Applicant: MATSUSHITA ELECTRIC INDUSTRIAL CO., LTD., Kadoma-shi, Osaka 571-8501 (JP)
(72) Inventor: IMAOKA, Takuya, Yokohama-shi, Kanagawa 224-0054 (JP); HORIGUCHI, Syuichi, Yokohama-shi, Kanagawa 241-0835 (JP)
(74) Representative: Pautex Schneider, Nicole
(86) International application number: PCT/JP2002/003995
(87) International publication number: WO 2002/089469

(57) **Abstract**

In a mobile terminal device equipped with an eye imaging device which can properly shoot an eye image without failure for personal authentication, an eye image shooting section (16) for personal authentication is arranged in close proximity of the upper section (distal side) of the liquid crystal display (13) on the front of a main unit casing (11) of the cellular phone. An image pickup lens of the eye image shooting section (16) includes a reflecting telephoto lens. An illumination section (17) is arranged above an operation button section (12) in close proximity of the lower section (proximal side) of the liquid crystal display (13). On the front surface of the cellular phone, the eye image shooting section (16), the liquid crystal display (13), the illumination section (17) and the operation button section (12) are provided in this order from top to bottom.

## Description

### Technical Field

The present invention relates to a mobile terminal device such as a cellular phone equipped with an eye imaging device for authenticating the user.

### Background Art

As a mobile terminal device such as a cellular phone and a Personal Digital Assistant (PDA) incorporate more and more features, a mobile terminal device that can store personal information such as telephone numbers and electronic mails are in widespread use. Thus, a mobile terminal device is required to have a security feature for protecting personal information.

As an example of such a security feature, there is provided a system to use the iris pattern of a human eye. For example, a cellular phone equipped with an eye imaging device as described in the Japanese Patent Publication No. H11-146057 and the Japanese Patent Publication No. 2000-307715

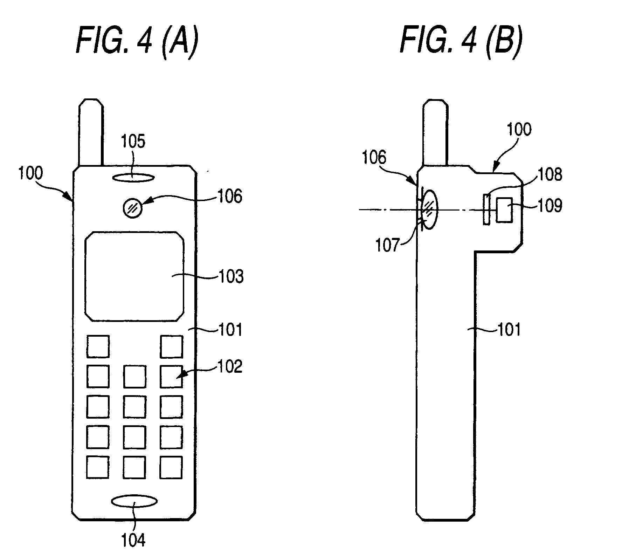

Fig. 4 is a schematic drawing that shows the configuration of a cellular phone equipped with an eye imaging device. Fig. 4A is a front view of the cellular phone. Fig. 4B is a side sectional view of the cellular phone. A cellular phone 100 includes a main unit casing 101 including an operation button section 102, a liquid crystal display 103, a speaker 104, a microphone 105, and an eye image shooting section 106. The eye image shooting section 106 includes an image pickup lens 107, a visible light cut filter 108, and an image pickup element 109. The image pickup lens 107 is arranged toward the front of the liquid crystal display 103 of the cellular phone 100. By using the eye image shooting section 106, it is possible to make personal authentication by shooting the image of an eye of the user to extract an iris pattern and comparing the iris pattern with a pre-registered iris pattern.

In the configuration of the shooting optical system of the eye image shooting section, a telephoto lens is required to obtain a large image of an iris pattern by using an infrared light. This results in a longer optical path length of the shooting optical system and a longer distance from the front of the image pickup lens 107. Thus, in the conventional configuration where an image pickup lens is arranged toward the front of the cellular phone, the depth in the thickness direction of the cellular phone is longer thus the casing becomes thicker.

When the image pickup lens is arranged in parallel with the front of the liquid crystal display of the cellular phone, the user cannot see the liquid crystal display during authentication of an iris pattern, so that it is impossible to issue an instruction concerning adjustment of shooting position to the user by way of the liquid crystal display during authentication. Also, shooting of an eye image is influenced by the shadow of eyelashes of the user or a reflected light from the user's glasses or the user happens to hide the illumination with his/her hand, thus it is sometimes impossible to correctly identify the iris pattern.

### Disclosure of the Invention

The invention has been proposed in view of the aforementioned circumstances and aims at providing a mobile terminal device equipped with an eye imaging device which can reduce the thickness of the mobile terminal device even when the image pickup lens of the eye imaging device is arranged toward the front of the main unit casing and can properly shoot an eye image without failure for personal authentication.

The invention is a mobile terminal device equipped with an eye image shooting section for shooting an eye image of the user to perform authentication, characterized in that the image pickup lens of the eye image shooting section comprises a reflecting telephoto lens.

Preferably, the mobile terminal device is characterized in that the shooting lens is arranged in approximately the same direction as the display for displaying the operating state of the mobile terminal device main unit and the front of the mobile terminal device main unit.

This results in a shorter physical distance between the front of the image pickup lens of the eye imaging device to the rear of the image pickup element thereby reducing the thickness of the eye imaging device and enhancing the freedom of arrangement. The image pickup lens of the eye imaging device can be arranged in approximately the same direction as the display of the mobile terminal device and the front of the mobile terminal device. In this case, it is possible to arrange the shooting lens and the display in close proximity without increasing the thickness of the device. Thus a user can perform persona authentication by properly shooting his/her own eye image while watching the display.

Preferably, the mobile terminal device is characterized in that the terminal comprises an illumination section for illuminating an eye of the user, that the illumination section is arranged below the image pickup lens toward the front of the mobile terminal device main unit, and that the optical axis of the illumination lens of the illumination section is tilted against the light axis of the image pickup lens by a predetermined angle.

This allows shooting with little influence of the shadow of eyelashes of the user caused by the illumination light for shooting from the illumination section. When applied to the mobile terminal device, the device casing is long in the vertical direction. Thus it is possible to arrange the image pickup lens and the illumination section apart in order to increase the tilt of the optical axis of the illumination lens against the optical axis of the image pickup lens. This avoids the influence of a reflected light from glasses worn by the user.

Preferably, the mobile terminal device is characterized in that the illumination section is arranged above the operation button section of the mobile terminal device toward the front of the mobile terminal device main unit.

This allows the illumination section and the image pickup lens to be located above the section of the mobile terminal device held by the user. This prevents a trouble where the user happens to hide the illumination section with hand during authentication.

Preferably, the mobile terminal device is characterized in that the display is arranged between the illumination section and the image pickup lens of the eye imaging device.

This allows the image pickup lens and the illuminating section of the eye imaging device apart with the display interposed. Thus, the user seldom happens to hide the illumination section with hand and reduce the influence of the shadow of his/her eyelashes and eliminates the influence of a reflected light from glasses worn by the user.

### Brief Description of the Drawings

Fig. 1 is a front view showing the external configuration of a cellular phone equipped with an eye imaging device according to an embodiment of the invention.
Fig. 2 is an explanatory side sectional view of a cellular phone shown in Fig. 1.
Fig. 3 is an explanatory view showing the configuration of a reflecting telephoto lens used as an image pickup lens in this embodiment.
Fig. 4 schematically shows the configuration of a cellular phone equipped with a conventional eye imaging device.

In the figures, a numeral 10 represents a cellular phone, 11 a main unit casing, 12 an operation button section, 13 a liquid crystal display, 16 an eye image shooting section, 17 an illumination section, 21 a reflecting telephoto lens, 22 a visible light cut filter, 23 an image pickup element, 24 an illumination lens, and 25 an infrared LED.

### Best Mode for Carrying Out the Invention

An embodiment of the invention will be described referring to drawings.

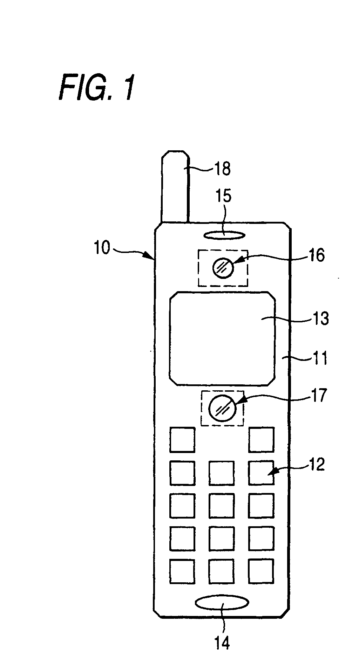

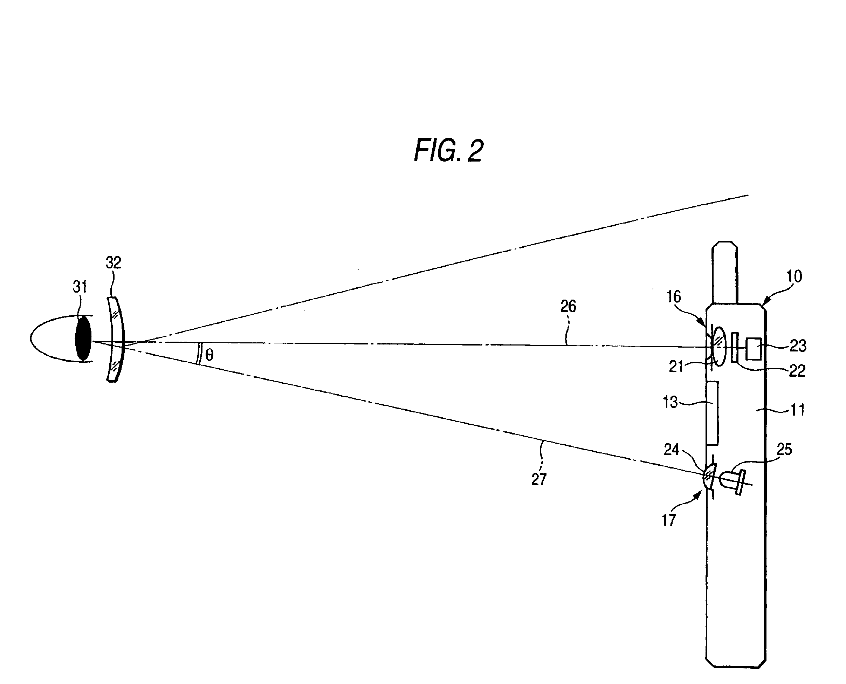

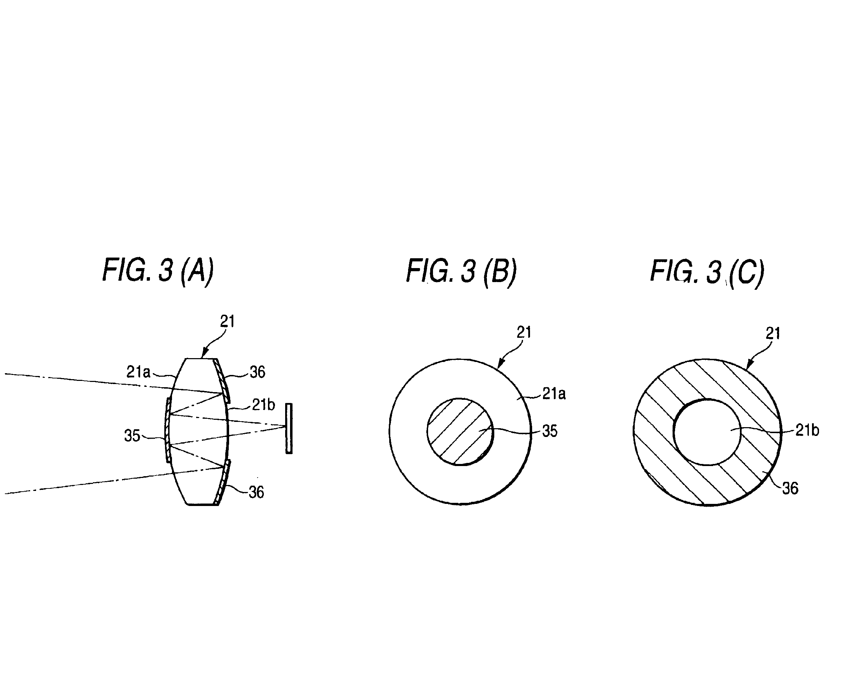

Figs. 1 to 3 pertains to an embodiment of the invention. Fig. 1 is a front view showing the external configuration of a cellular phone equipped with an eye imaging device according to an embodiment of the invention. Fig. 2 is an explanatory side sectional view of a cellular phone shown in Fig. 1. Fig. 3 is an explanatory view showing the configuration of a reflecting telephoto lens used as an image pickup lens in this embodiment. In Fig. 2, only the key components related to this embodiment are shown.

The cellular phone 10 includes, on one face of the main unit casing 11, an operation button section 12 for making various operation/input, a liquid crystal display 13 servingas adisplay for performing various displays such as operating state, a speaker 14 for issuing received voice, a microphone 15 for collecting send voice, an eye image shooting section 16 having the eye imaging device for shooting an eye image to obtain an iris pattern, and an illumination section 17 for emitting an illumination light for eye image shooting. On one end (upper section/distal side of the cellular phone held by the user) of the cellular phone 10 protrudes an antenna 18 for sending/receiving radio communications waves. The outer face of the main unit casing 11 where the liquid crystal display 13 and the eye image shooting section 16 are arranged is assumed as the front of the cellular phone 10.

The operation button section 12 is arranged in the lower section (proximal side) in the state where the user holds the main unit casing 11. The liquid crystal display 13 is arranged above the operation button section 12 close to the antenna 18 on the distal side. In close proximity of the upper section (distal side) of the liquid crystal display 13, the eye image shooting section 16 is arranged. The illumination section 17 is arranged between the eye image shooting section 16 and the operation button section 12 in close proximity of the lower section (proximal side) of the liquid crystal display 13. The liquid crystal display 13 has a liquid crystal display element for displaying characters and images and displays instructions on the authentication operation and an eye image to be shot during personal authentication of the user. The operation button section 12 has button keys for starting personal authentication and shooting of an eye image.

The eye image shooting section 16 has an image pickup lens including a reflecting telephoto lens 21 as a shooting optical system and a visible light cut filter 22 described later, as well as an image pickup element 23 as image pickup means. The eye image shooting section 16 is the eye imaging device for shooting a human eye to obtain an iris pattern from the resulting eye image. The variable light cut filter interrupts a visible light and transmits an infrared light alone in order to obtain the infrared light component of the eye image of the user as a subject. The image pickup element 23 includes a solid image pickup element such as a CCD (Charge Coupled Device) and a CMOS image pickup element and shoots an image of an eye 31 of the user by way of an infrared light then outputs an image pickup signal of the eye image. The eye image shooting section 16 and the liquid crystal display 13 are arranged in approximately the same direction toward the front of the cellular phone 10.

The illumination section 17 includes an illumination lens 24 and an infrared LED (Light Emitting Diode) 25. The illumination section 17 is an infrared illumination device for illuminating the periphery of the eye 31 of the user. The infrared LED 25 is a light source for shooting a clear iris pattern of a human eye. The illumination lens 24 is an illumination optical system for converging infrared rays around the eye 31. As shown in Fig. 2, in this embodiment, the eye image shooting section and the illumination section 17 are arranged apart from each other with the liquid crystal display 12 interposed in order to tilt the light axis 27 of the illumination section 17 against the light axis 26 of the eye image shooting section 16 by a predetermined angle θ so as to illuminate the periphery of the eye 31 of the user. With this configuration, it is possible to eliminate the influence of a reflected light from glasses 32 in case the user under personal authentication wears glasses 32.

In this embodiment, the liquid crystal display 13 is arranged between the eye image shooting section 16 and the illumination section 17 so that the user positions the eye 31 while watching the instruction displayed on the liquid crystal display 13 and shoot an eye image at a time of personal authentication. This keeps the relation between the eye image shooting section 16, the illumination section 17 and the eye 31 in an optimum state. Thus, there are less chances of the shadow of eyelashes of the user being shot, thereby obtaining a good eye image without faults. The operation button section 12 is arranged in the lower section (proximal side) of the illumination section 17 so that the trouble that the user happens to hide the illumination with his/her hand is prevented.

Next, configuration of a reflecting telephoto lens 21 will be described referring to Fig. 3. Fig. 3A shows a side view. Fig. 3B shows a front view showing the objective surface. Fig. 3C shows a rear view showing the surface opposite to the objective surface. The reflecting telephoto lens 21 includes a biconvex lens. In the center of an objective surface 21a is deposited a circular reflective film 35. A donut-shaped reflective film is deposited on the entire periphery of the surface 21b opposite to the objective surface. By providing a reflective surface on a biconvex lens in this way, an optical system including a concave mirror serving as a turn of an optical path is provided. Thus formed is a telephoto-type imaging lens having a long focal length with short physical length in the direction of thickness. While the reflecting telephoto lens 21 is shown by a single lens, a plurality of lenses may be used instead.

In the reflecting telephoto lens 21 of such a configuration, a ray incident on the objective surface 21a is reflected and converged on the reflecting plane of the reflective film 36 of the surface 21b opposite to the objective surface, reflected and converged on the reflecting plane of the reflective film 35 of the objective surface 21a, then imaged outside the lens on the surface opposite to the objective surface. By arranging the image pickup surface of the image pickup element 23 on the imaging plane of the reflecting telephoto lens 21, an eye image of the user as a subject is shot. The physical distance from the entrance plane of the object surface of the lens to the focal point of the lens can be reduced. It is thus possible to arrange the eye image shooting section 16 facing toward the front of the cellular phone 16 in short length in the direction of thickness.

The cellular phone 10 of the configuration performs personal authentication of the user before it is used, and allows reference to/utilization of personal information treated as confidential information only in case the user is identified. When the user presses a personal authentication button in the an operation button section 102 to start personal authentication, an instruction to guide the eye of the user to an optimum position is displayed on the liquid crystal display 13. To place his/her eye in the optimum position, the user moves the cellular phone 10 which he/she is holding or moves his/her head. When the relation between the eye of the user, the eye image shooting section 16 and the illumination section 17 of the cellular phone 10 becomes optimum, a state display to showing the eye image shooting state is given on the liquid crystal display 11. In this state, when the user presses a shooting button in the operation button section 12 or by way of a control signal from a controller inside the cellular phone 10, an eye image of the user illuminated by the illumination section 17 is shot using an infrared light in the eye image shooting section 16. An iris pattern is extracted based on the obtained eye image, then the pattern is compared with a pre-registered iris pattern of the user to authenticate the user.

Such personal authentication prevents wrong use by a third party other than the authorized user or leakage of personal information, thereby providing a security feature to protect personal information.

According to this embodiment, it is possible to reduce the distance from the front surface of the lens to the rear surface of the image pickup element by using a reflecting telephoto lens in the shooting optical system of the eye image shooting section, thereby arranging the eye image shooting section with small thickness directed toward the front of the cellular phone. Thus, there are no protrusions on the rear of the main unit casing 11, thus the rear surface is almost flat, which adds to lower-profile design. By arranging the eye image shooting section in the upper section or on the distal side of the liquid crystal display and the illumination section in the lower section or on the proximal side, it is possible to arrange the eye image shooting section and the illumination section apart from each other with the liquid crystal display interposed and arrange the operation button section below (on the proximal side of) the illumination section, thereby eliminating the influence of the shadow of eyelashes of the user or a reflected light from the user's glasses as well as the trouble that the user happens to hide the illumination with his/her hand. This properly shoots a good eye image with more crisp iris pattern. Thus it is possible to provide a mobile terminal device equipped with an excellent trouble-free personal authentication feature.

While the invention has been described in detail and referring to the specific embodiment, those skilled in the art will appreciate that various modifications and corrections may be made to the invention without departing from the spirit and scope of the invention.

This patent application is based on the Japanese Patent Application No. 2001-132235 filed April 27, 2001 and its disclosure is incorporated herein by reference.

### Industrial Applicability

As mentioned earlier, according to the invention, it is possible to provide a mobile terminal device equipped with an eye imaging device which can reduce the thickness of the device even when the image pickup lens of the eye imaging device is arranged toward the front of the device casing and can properly shoot an eye image without failure for personal authentication.

## Claims

1. A mobile terminal device comprising:
an eye image shooting section for shooting an eye image of the user to perform authentication, wherein an image pickup lens of the eye image shooting section comprises a reflecting telephoto lens.

2. The mobile terminal device according to claim 1, wherein the shooting lens is arranged on a front surface of a mobile terminal device main unit to face substantially the same direction as a display for displaying an operating state of the mobile terminal device main unit.

3. The mobile terminal device according to claim 1 or 2, further comprising an illumination section for illuminating an eye of the user,
wherein the illumination section is arranged below the image pickup lens with respect to the front face of the mobile terminal device main unit,
wherein an optical axis of an illumination lens of an illumination section is tilted against a light axis of the image pickup lens by a predetermined angle.

4. The mobile terminal device according to any one of claims 1 through 3, wherein the illumination section is arranged above an operation button section of themobile terminal device with respect to the front surface of the mobile terminal device main unit.

5. The mobile terminal device according to any one of claims 1 through 4, wherein the display is arranged between the illumination section and the image pickup lens of the eye imaging device.

6. The mobile terminal device according to any one of claims 1 through 5, wherein a circular reflective film is provided in a center of an objective surface of the reflecting telephoto lens, and a donut-shaped reflective film is provided on a surface opposite to the objective surface of the reflecting telephoto lens.

7. The mobile terminal device according to any one of claims 1 through 6, wherein the reflecting telephoto lens is a biconvex lens.

8. The mobile terminal device according to any one of claims 1 through 7, wherein the reflecting telephoto lens is a single lens.

9. The mobile terminal device according to any one of claims 1 through 8, wherein the rear surface of the mobile terminal device comprises a flat plane without protrusions.
